# EUROPÄISCHE PATENTSCHRIFT

(11) **EP 1 060 863 B1**
(45) Veröffentlichungstag und Bekanntmachung des Hinweises auf die Patenterteilung: **02.10.2002**
(21) Anmeldenummer: 00112198.7
(22) Anmeldetag: 07.06.2000
(51) Int. Cl.: B29C 45/58, B29C 45/60

(54) **Vorrichtung zum Spritzgiessen von Formlingen**
Apparatus for injection moulding of shaped bodies
Dispositif pour mouler par injection des corps formés

(30) Priorität: 15.06.1999 DE 19927199; 20.04.2000 DE 10019722
(43) Veröffentlichungstag der Anmeldung: 20.12.2000
(73) Patentinhaber: Potthoff, Rüdiger, 58566 Kierspe (DE)
(72) Erfinder: Potthoff, Rüdiger, 58566 Kierspe (DE)
(74) Vertreter: Köchling, Conrad-Joachim

(56) Entgegenhaltungen:
- WO-A-90/10529
- DE-A- 1 809 107
- DE-A- 1 903 540
- DE-B- 1 283 496
- DE-C- 911 542
- PATENT ABSTRACTS OF JAPAN vol. 1997, no. 07, 31. Juli 1997 (1997-07-31) -& JP 09 076293 A (MEIKO KASEI KOGYO KK), 25. März 1997 (1997-03-25)

## Beschreibung

Die Erfindung betrifft eine Vorrichtung zum Spritzgießen von Formlingen aus plastifizierbarem Werkstoff, insbesondere Kunststoff, vornehmlich PVC, bestehend aus einer Plastifiziereinheit mit Plastifizierzylinder und Plastifizier- und Einspritzschnecke und einem den Plastifizierzylinder verschließenden Bereich mit einem Kanal für den plastifizierten Werkstoff, wobei dieser Bereich einen sich vom Plastifizierzylinderinnendurchmesser auf den Kanaldurchmesser verjüngenden kegeligen Übergang aufweist und in den kegelförmigen Übergang ein Schmelzeverdrängungskörper (1) eingesetzt ist, zwischen dem Verdrängungskörper (1) und dem kegeligen Übergang des den Plastifizierzylinder verschließenden Bereichs ein Ringspalt gebildet ist, am Fuß des Verdrängungskörpers (1) ein radial vorragender ringförmiger Stützkragen (2) vorgesehen ist, der Stützkragen (2) von Bohrungen (3) durchsetzt ist, die in den Ringspalt münden und deren Abstand voneinander kleiner als deren Durchmesser ist, und von der dem Verdrängungskörper (1) abgewandten, der Plastifizier-und Einspritzschnecke zugewandten Seite des Stützkragens (2) mittig zwischen dem von den Bohrungen (3) aufgespannten Kreis ein zweiter kegeliger Körper (5) abragt.

Bei früher bekannten Vorrichtungen besteht das Problem, dass in der kegeligen Höhlung am Kegelmantel innenliegend die Strömung der plastifizierten Masse sehr gering ist, so dass die Masse am Innenmantel des Kegels haften bleibt. Dieses anhaftende Material brennt dort fest und zersetzt sich. Beim Spritzvorgang lösen sich ab und zu Partikel der immer dicker werdenden anhaftenden Materialschicht. Diese werden mit dem Materialstrom mitgerissen und führen zu fehlerhaften Teilen, insbesondere dann, wenn es sich um glasklare Teile handelt. Zu solchen Materialzersetzungen neigt insbesondere PVC, aber auch andere Kunststoffarten.

Aus der Patent Abstracts of Japan vol. 1997, no. 07, 31. Juli 1997 (1997-07-31) und JP 09 076293 A ist eine Vorrichtung zum Spritzgießen von Formlingen bekannt, bei der zur Vermeidung des Fadenziehens eine besondere Einrichtung vorgesehen ist. Diese Einrichtung entspricht der Vorrichtung gemäß Oberbegriff des Anspruches 1. Bei dieser Anordnung ist der Schmelzeverdrängungskörper, der in den kegeligen Übergang des den Plastifizierzylinder verschließenden Bereichs eingesetzt ist, der Kegelform dieses Bereiches nicht angepasst, sondern es schließt sich an den zunächst kegeligen Schmelzeverdrängungskörper ein axialer Stift an. Zudem sind die Bohrungen, die den Stützkragen durchsetzen, im Durchmesser kleiner ausgebildet, als der.Dicke des Ringspaltes zwischen Verdrängungskörper und dem ihn aufnehmenden Bereich in radialer Richtung gesehen entspricht. Gemäß dieser Ausbildung wird die durch die Bohrungen 28 einströmende plastifizierte Masse nicht gleichmäßig mit hoher Strömungsgeschwindigkeit durch den Ringspalt geführt, sondern es bilden sich schon im Bereich der Einströmung der plastifizierten Masse durch die Bohrungen 28 in Strömungsrichtung unmittelbar hinter den Bohrungen 28 Verwirbelungen, die zu Ruhenestern oder Ruhezonen führen, in denen das Material an umliegenden Flächen sich absetzen kann und festbrennen kann. Auch im weiteren Verlauf des Ringspaltes wird eine ungleichmäßige Strömung erreicht, insbesondere durch den Übergang zwischen dem kegeligen Körper und er anschließenden stiftartigen Spitze resultiert. Auch hieraus folgt, dass durch Verwirbelungen und dergleichen Materialablagerungszonen gebildet werden, in denen das durchströmende Material anheften kann und festbrennen kann.

Im Ergebnis führt dies zu den gleichen Nachteilen, die vorstehend beschrieben worden sind.

Der Erfindung liegt die Aufgabe zugrunde, eine Vorrichtung gattungsgemäßer Art zu schaffen, bei der das Anhaften von Material am Innenmantel der kegeligen Höhlung weitestgehend oder vollständig unterbunden ist.

Zur Lösung dieser Aufgabe wird vorgeschlagen, dass die Bohrungen sich zur Plastifizier- und Einspritzschnecke trichterförmig erweitern, der Verdrängungskörper kegelförmig ausgebildet ist und dass der Durchmesser jeder Bohrung der Dicke des Ringspaltes entspricht.

Der Verdrängungskörper kann als relativ einfaches Drehteil gefertigt werden, wobei beidseitig von dem radial vorstehenden Stützkragen mittig kegelige Körper abragen, deren einer in den kegeligen Übergang des den Plastifizierzylinder verschließenden Teils eingreift und deren anderer in Richtung auf die Plastifizier- und Einspritzschnecke vorragt, wobei die Spitze dieses kegeligen Körpers unmittelbar vor dem Ende der Plastifizier- und Einspritzschnecke liegt. Der Stützkragen stützt sich in Sollage an einem Absatz des kegeligen Übergangs des den Plastifizierzylinder verschließenden Teils ab.

Ein derartiges Drehteil ist relativ einfach zu fertigen. Ferner sind im Stützkragen Durchgangsbohrungen vorgesehen, die radial um den Fuß der beiden kegeligen Körper gleichmäßig verteilt relativ dicht aneinander vorgesehen sind. Bei diesen Bohrungen handelt es sich um einfache zylindrische Bohrungen, die in einfacher Weise hergestellt werden können. Die Bohrungen zielen in den Ringspalt, der zwischen dem kegeligen Schmelzeverdrängungskörper und dem kegeligen Übergang des den Plastifizierzylinder verschließenden Teils gebildet ist. Dabei sind die Bohrungen auf der Seite, die der Plastifizier- und Einspritzschnecke zugewandt sind, trichterförmig erweitert, was ebenfalls durch einen einfachen Bearbeitungsvorgang, beispielsweise durch eine Einsenkung erzeugt werden kann. Durch diese Ausbildung wird erreicht, dass die Schmelze, die von der Plastifizier- und Einspritzschnecke abgefördert wird, gleichmäßig und mit ziemlich konstanter Strömung durch die Bohrungen gepresst wird und unter konstanter Strömungsgeschwindigkeit durch den Ringspalt abgefördert wird. Aufgrund der gewählten Ausbildung bleibt die Strömungsgeschwindigkeit der Spritzmasse weitestgehend erhalten, so dass an den Wandungsteilen, die den Ringspalt begrenzen, kein Material anhaften bleibt und verbrennt. Durch die trichterförmigen Einlauföffnungen der Kanäle, die vorzugsweise ineinander übergehen, wird der Anteil von planen Flächenelementen in dem Bereich, der der Schneckenspitze zugewandt ist, minimiert, wobei für diesen Effekt auch der dort abragende kegelige Körper notwendig ist.

Bevorzugt ist vorgesehen, dass die Bohrungen parallel zueinander und parallel zur Mittelachse der kegeligen Körper verlaufen.

Diese Ausbildung ist für den zwängungsfreien Schmelzedurchtritt und für eine einfache Fertigung vorteilhaft.

Um einen radialen Schmelzeaustritt am Stützkragen zu vermeiden, ist zudem vorgesehen, dass der Verdrängungskörper mit seinem Stützkragen an einer ringförmigen Anschlagfläche des den Plastifizierzylinder verschließenden Bereiches dicht anliegt.

Ausgehend von einer Vorrichtung zum Spritzgießen von Formlingen aus plastifizierbarem Werkstoff, insbesondere Kunststoff, vornehmlich PVC, bestehend aus einer Plastifiziereinheit mit Plastifizierzylinder und Plastifizier- und Einspritzschnecke und einem den Plastifizierzylinder verschließenden Bereich mit einem Kanal für den plastifizierten Werkstoff, wobei dieser Bereich einen sich vom Plastifizierzylinderinnendurchmesser auf den Kanaldurchmesser verjüngenden kegeligen Übergang aufweist schlägt die Erfindung zur Lösung der eingangs bezeichneten Aufgabe vor, dass in den kegelförmigen Übergang ein kegeliger Schmelzeverdrängungskörper unverdrehbar eingesetzt ist, der eine sich zur Plastifizier-und Einspritzschnecke hin kegelförmig erweiternde mittige Bohrung und auf dem Kegelmantel verteilte, radial nach außen offene Längsnuten aufweist, die sich an der Plastifizier- und Einspritzseite zugewandten Seite trichterförmig erweitern.

Bevorzugt ist dazu vorgesehen, dass Ränder der in Umfangsrichtung benachbarten trichterförmigen Ausnehmungen ineinander übergehen.

Zudem ist bevorzugt, dass die Ränder der um die mittige trichterförmige Ausnehmung verteilt angeordneten, weiteren trichterförmigen Ausnehmungen in den Rand der mittigen Ausnehmung übergehen.

Auch kann bevorzugt sein, dass der Schmelzeverdrängungskörper an seinem der Spitze abgewandten Ende einen ringförmigen Stützkragen aufweist, dessen der Spitze zugewandte Ringfläche an einer ringförmigen Anschlagfläche der Düse anliegt.

Durch den kegeligen Schmelzeverdrängungskörper mit den nach außen offenen in Längsrichtung verlaufenden eingearbeiteten Materialnuten, die an den trichterförmigen Einlauföffnungen beginnen, und mit der mittigen Lochung, die ebenfalls eine trichterförmige Einlochöffnung aufweist, wird erreicht, dass die Strömungsgeschwindigkeit der Spritzmasse weitestgehend erhalten bleibt, so dass am Innenmantel der kegeligen Höhlung kein Material anhaftet und verbrennt.

Zudem wird durch die trichterförmigen Einlauföffnungen und das Ineinanderübergehen dieser trichterförmigen Ausnehmungen der Anteil von planen Flächenelementen am der Schneckenspitze zugewandten Ende des Schmelzeverdrängungskörpers minimiert.

Vorzugsweise ist der Schmelzeverdrängungskörper in der entsprechenden Aufnahme der Düse radial unverdrehbar festgesetzt.

Dabei ist bevorzugt vorgesehen, dass das Ende der Plastifiziereinheit als zweiflügeliges Förderelement mit mittigem Materialabgabekanal, der eine kreisabschnittförmige Ausfräsung aufweist, ausgebildet ist.

Eine bevorzugte Weiterbildung wird darin gesehen, dass das dem Schmelzeverdrängungskörper zugewandte Ende der Plastifiziereinheit, insbesondere der Schneckenspitze, im wesentlichen als plane Fläche ausgebildet ist, die sich quer zur Förderrichtung der Plastifiziereinheit erstreckt und an die Unterseite des Schmelzeverdrängungskörpers anlegbar ist.

Dabei ist bevorzugt vorgesehen, dass das Ende der Plastifiziereinheit als zweiflügeliges Förderelement mit mittigem Materialabgabekanal ausgebildet ist.

Auch ist vorgesehen, dass das Ende der Plastifiziereinheit im Durchmesser der Ausnehmung am Ende des Verdrängungskörpers eng angepasst ist, vorzugsweise nur Bruchteile eines Millimeters kleiner ist.

Besonders bevorzugt ist vorgesehen, dass die plane Endfläche der Plastifiziereinheit in eine gegen die Förderrichtung leicht ansteigende, wendelartige Fläche übergeht.

Die der entsprechenden Fläche des auswechselbaren Schmelzeverdrängungskörpers angepasste Endfläche der Plastifiziereinheit, insbesondere der Schneckenspitze, ist nicht spitz, wie bei bisher üblichen Schneckenspitzen, sondern als im wesentlichen plane Fläche ausgebildet. Des Weiteren ist der Durchmesser der Schneckenspitze der Plastifiziereinheit, im Durchmesser nicht wie sonst üblich deutlich kleiner als die Zylinderbohrung, in der das Ende der Schneckenspitze umläuft, sondern der Durchmesser ist nur um wenige Bruchteile eines Millimeters kleiner als die entsprechende umgebende zylindrische Wandung, so dass am Ende der Zylinderbohrung ebenfalls ein Anbacken von Material verhindert ist. Das Ende der Schneckenspitze hat ebenfalls im Gegensatz zu den bisher üblichen Schneckenspitzen einen mittigen Materialkanal sowie eine kreisabschnittförmige Ausfräsung, durch den die plastifizierte Masse austritt, woraus resultiert, dass die Masse auch in diesem Bereich eine hohe Strömungsgeschwindigkeit hat und in diesem ebenfalls kritischen Bereich nicht anhaftet. Schließlich hat die Schneckenspitze an ihrem planen Ende entgegen Drehrichtung ansteigende wendelförmige Flächenelemente, die an die plane Fläche anschließen. Hierdurch wird das Entstehen eines Strömungsschattens vermieden, so dass auch dort kein Material anbacken kann.

Ausführungsbeispiele der Erfindung sind in der Zeichnung dargestellt und im Folgenden näher beschrieben.

Es zeigt:

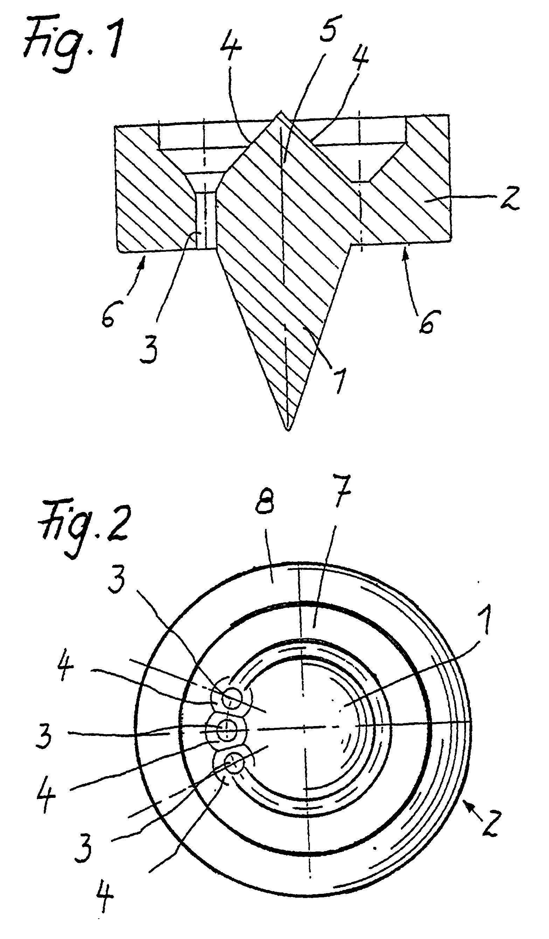

- Figur 1: einen kegeligen Verdrängungskörper im Mittelschnitt gesehen;

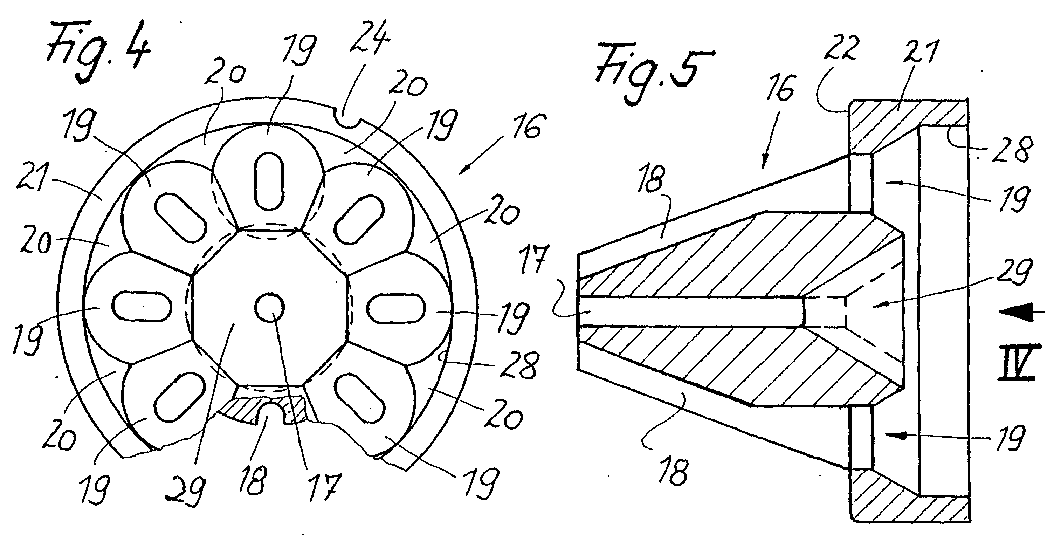

- Figur 2: desgleichen in Draufsicht gesehen.
- Figur 3: eine Düse im Mittellängsschnitt gesehen;
- Figur 4: einen in die Düse einsetzbaren Schmelzeverdrängungskörper im Schnitt gesehen;
- Figur 5: desgleichen in Blickrichtung des Pfeiles III in Figur 4 gesehen;
- Figur 6: eine Schneckenspitze in Seitenansicht;
- Figur 7: desgleichen in Blickrichtung des Pfeiles V in Figur 6 gesehen.

Das wesentliche Element der Vorrichtung zum Spritzgießen von Formlingen aus plastifizierbarem Werkstoff, insbesondere Kunststoff, vornehmlich PVC, ist ein Schmelzeverdrängungskörper 1, der in das den Plastifizierzylinder verschließende Teil eingesetzt ist, welches einen Kanal für den plastifizierten Werkstoff aufweist und einen sich vom Plastifizierzylinderinnendurchmesser auf den Kanaldurchmesser verjüngenden kegeligen Übergang. In diesen kegeligen Übergang ist der Schmelzeverdrängungskörper 1 eingesetzt. Zwischen dem kegeligen Schmelzeverdrängungskörper 1 und dem kegeligen Übergang des den Plastifizierzylinder verschließenden Teils wird somit ein Ringspalt gebildet. Am Fuß des kegeligen Verdrängungskörpers 1 ist ein radial vorragender ringförmiger Stützkragen 2 vorgesehen, der von Bohrungen 3 durchsetzt ist, die in den Ringspalt münden. Die Bohrungen 3 erweitern sich zur Plastifizier- und Einspritzschnecke hin trichterförmig (bei 4). Von der dem kegeligen Verdrängungskörper 1 abgewandten, der Plastifizier-und Einspritzschnecke zugewandten Seite des Stützkragens 2 ragt mittig zwischen dem von den Bohrungen 3 aufgespannten Kreis ein zweiter kegeliger Körper 5 ab. Die Bohrungen 3 sind parallel zueinander und parallel zur Mittelachse der kegeligen, zueinander koaxial Körper 1,5 gerichtet. Der Durchmesser jeder Bohrung 3 entspricht etwa der Dicke des Ringspaltes in radialer Richtung gesehen.

Der Abstand der Bohrungen 3 voneinander ist kleiner als deren Durchmesser, wobei vorzugsweise die trichterförmigen Erweiterungen 4 der benachbarten Bohrungen 3 ineinander übergehen.

Der Verdrängungskörper 1 liegt mit der Stirnfläche 6 seines Stützkragens an einer ringförmigen Anschlagfläche des den Plastifizierzylinder verschließenden Teils dicht an, wobei vorzugsweise die Fläche in eine ringförmige leicht vorstehende plane Fläche 7 und eine gegenüber dieser zurückliegende Fläche 8 aufgegliedert ist, so dass die Fläche 7 die Dichtfläche bildet.

Aufgrund der dargestellten Ausbildung wird erreicht, dass ein gleichmäßiger Strömungsfluss der plastifizierten Masse erreicht wird, so dass ein Anbacken von Material aufgrund von Turbulenzen oder verminderten Strömungsgeschwindigkeiten weitestgehend vermieden ist. Aufgrund dieser Ausbildung sind die entsprechenden Teile insbesondere aus klarsichtigem Kunststoff mit hoher Präzision und geringer Fehlerquote zu fertigen, da Verunreinigungen der Teile durch an Bestandteilen des Plastifizierorgans oder des Verdrängungskörpers oder der Spitze anhaftende Materialteile, die sich zersetzen, vermieden sind. Zudem ist aufgrund der dargestellten Konfiguration die Herstellung stark vereinfacht.

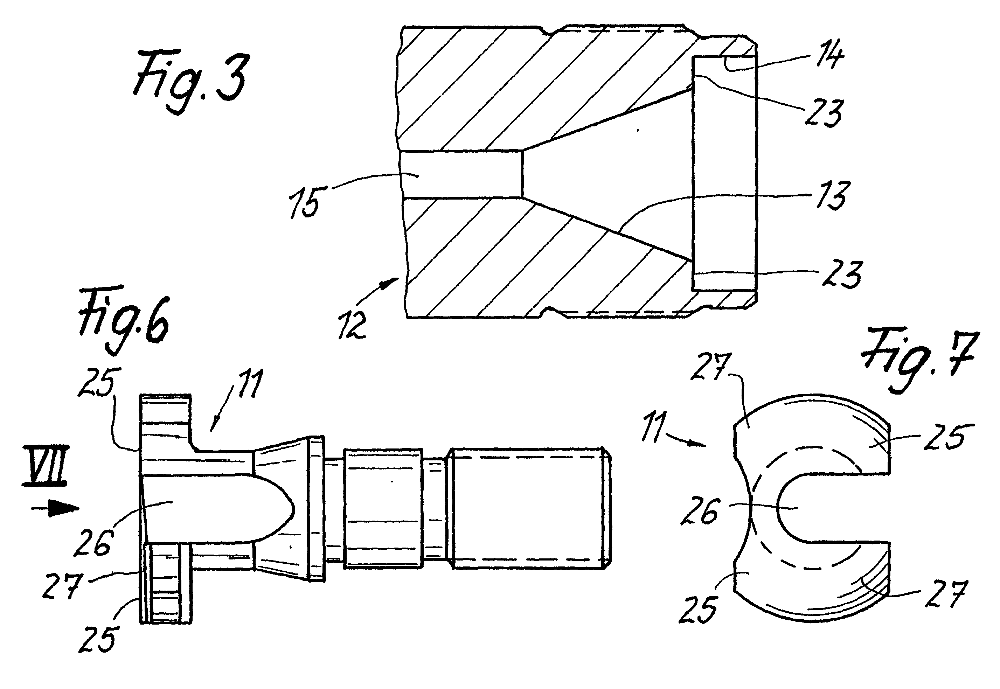

Bei der Ausführungsform nach Figur 3 bis 7 ist eine Plastifiziereinheit mit einer Schneckenspitze gezeigt (Figur 6 + 7), sowie die Düse 12, die in Figur 3 gezeigt ist, mittels derer die plastifizierte Masse von der Förderschnecke 11 in die Kavität des entsprechenden Formwerkzeuges eingespritzt wird. Die Düse 12 hat eine kegelige Höhlung 13, die beispielsweise einen Kegelwinkel von 20° aufweist. An ihrem der Förderschnecke 11 zugewandten Ende, weist die Düse einen zylindrischen Absatz 14 auf. Die kegelige Höhlung 13 geht in einen Abgabekanal 15 über. In den Figuren 4 und 5 ist ein Schmelzeverdrängungskörper 16 gezeigt, der in die kegelige Höhlung 13 der Düse 12 eingesetzt wird. Der Schmelzverdrängkungskörper weist eine mittige Lochung 17 an seiner Spitze und radial auf den Kegelmantel verteilt nach radial außen offene Längsnuten auf,.wobei im Ausführungsbeispiel acht solcher Längsnuten 18 vorgesehen sind. An der Unterseite des kegelförmigen Schmelzeverdrängungskörpers 16 sind trichterförmige Ausnehmungen 19 ausgebildet, an die sich die Längsnuten 18 und die mittige Lochung 17 anschließen. Wie insbesondere aus Figur 5 ersichtlich, gehen die Ränder der in Umfangsrichtung benachbarten trichterförmigen Ausnehmungen 19 ineinander über und ebenso gehen die Ränder der um die mittige trichterförmige Ausnehmung 29 verteilt angeordneten weiteren trichterförmigen Ausnehmungen 19 in den Rand der mittigen Ausnehmung 29 über. Es wird somit der Anteil von planen Flächenelementen auf die Bereiche. 20 eingeschränkt, so dass nur noch minimale Planflächenanteile vorhanden sind, die quer zur Strömungsrichtung der durchströmenden Masse gerichtet verlaufen. Zwischen den trichterförmigen Ausnehmungen 19 verbleiben lediglich scharfkantige Kanten. Der Schmelzeverdrängungskörper 16 weist zusätzlich an seinem der Spitze abgewandten Ende einen ringförmigen Stützkragen 21 auf, dessen der Spitze zugewandte Ringfläche 22 an einer ringförmigen Anschlagfläche 23 der Düse im Bereich des zylindrischen Teiles 14 anliegt. Um eine drehfeste Anordnung des Verdrängungskörpers 16 relativ zur Düse 12 zu erreichen, weist der Stützkragen 21 beispielsweise eine nach radial außen offene Nut 24 auf, in die ein entsprechend am Teil 14 ausgebildeter Steg eingreift, so dass der Verdrängungskörper axial beweglich ist, radial aber unverdrehbar an der Düse gehalten ist.

Das dem Schmelzeverdrängungskörper 16 zugewandte Ende der Plastifiziereinheit, insbesondere der Schneckenspitze 11, ist im wesentlichen als plane Fläche 25 ausgebildet, die sich quer zur Förderrichtung der Schneckenspitze 11 erstreckt und die an die Unterseite des Schmelzeverdrängungskörpers 16 anlegbar ist. Dabei ist die Schneckenspitze 11 als zweiflügeliges Förderelement mit mittigem Materialausgabekanal 26 ausgebildet. Das Ende der Schneckenspitze 11 ist im Durchmesser der Ausnehmung 28 am Ende des Verdrängungskörpers 16 eng angepasst, so dass es nur Bruchteile eines Millimeters im Durchmesser kleiner ist als die entsprechende Ausnehmung 28. Zudem schließt sich an die plane Endfläche 25 in radialer Richtung eine gegen die Förderrichtung leicht ansteigende, wendelartige Fläche 27 an, wodurch bei der Drehung der Schneckenspitze kein Strömungsschatten entsteht und auch dort ein Anbacken von Material verhindert wird.

Insgesamt wird durch die erfindungsgemäße Ausbildung erreicht, dass im Bereich der kegeligen Höhlung 13 ebenso wie im Übergangsbereich von der Schneckenspitze zum Verdrängungskörper 16 und ebenso am Verdrängungskörper 16 selbst ein Anbacken von Material aufgrund von verminderten Strömungsgeschwindigkeiten vermieden wird. Aufgrund dieser Ausbildung sind entsprechende Teile, insbesondere aus klarsichtigem Kunststoff mit höherer Präzision und mit geringerer Fehlerquote zu fertigen, da Verunreinigungen der Teile durch an Bestandteilen der Düse, des Verdrängungskörpers oder der Spitze anhaftende Materialanteile, die sich zersetzen, vermieden sind. Der Einsatz eines entsprechenden Schmelzeverdrängungskörpers 16 ist nicht nur in entsprechenden Düsen 12 möglich und vorteilhaft, sondern ein solcher Schmelzeverdrängungskörper 16 kann auch in konische Düsenübergänge oder dergleichen eingesetzt werden, wodurch die oben beschriebenen Probleme ebenfalls beseitigt werden.

## Patentansprüche

1. Vorrichtung zum Spritzgießen von Formlingen aus plastifizierbarem Werkstoff, insbesondere Kunststoff, vornehmlich PVC, bestehend aus einer Plastifiziereinheit mit Plastifizierzylinder und Plastifizier- und Einspritzschnecke und einem den Plastifizierzylinder verschließenden Bereich mit einem Kanal für den plastifizierten Werkstoff, wobei dieser Bereich einen sich vom Plastifizierzylinderinnendurchmesser auf den Kanaldurchmesser verjüngenden kegeligen Übergang aufweist und in den kegelförmigen Übergang ein Schmelzeverdrängungskörper (1) eingesetzt ist, zwischen dem Verdrängungskörper (1) und dem kegeligen Übergang des den Plastifizierzylinder verschließenden Bereichs ein Ringspalt gebildet ist, am Fuß des Verdrängungskörpers (1) ein radial vorragender ringförmiger Stützkragen (2) vorgesehen ist, der Stützkragen (2) von Bohrungen (3) durchsetzt ist, die in den Ringspalt münden und deren Abstand voneinander kleiner als deren Durchmesser ist, und von der dem Verdrängungskörper (1) abgewandten, der Plastifizier-und Einspritzschnecke zugewandten Seite des Stützkragens (2) mittig zwischen dem von den Bohrungen (3) aufgespannten Kreis ein zweiter kegeliger Körper (5) abragt, **dadurch gekennzeichnet, dass** die Bohrungen (3) sich zur Plastifizier- und Einspritzschnecke trichterförmig erweitern, der Verdrängungskörper (1) kegelförmig ausgebildet ist und dass der Durchmesser jeder Bohrung (3) der Dicke des Ringspaltes entspricht.

2. Vorrichtung nach Anspruch 1, **dadurch gekennzeichnet, dass** die Bohrungen (3) parallel zueinander und parallel zur Mittelachse der kegeligen Körper (1,5) verlaufen.

3. Vorrichtung nach einem der Ansprüche 1 oder 2, **dadurch gekennzeichnet, dass** die trichterförmigen Einlauföffnungen der Bohrungen (3) ineinander übergehen.

4. Vorrichtung nach einem der Ansprüche 1 bis 3, **dadurch gekennzeichnet, dass** der Verdrängungskörper (1) mit seinem Stützkragen (2) an einer ringförmigen Anschlagfläche des den Plastifizierzylinder verschließenden Bereiches dicht anliegt.

5. Vorrichtung zum Spritzgießen von Formlingen aus plastifizierbarem Werkstoff, insbesondere Kunststoff, vornehmlich PVC, bestehend aus einer Plastifiziereinheit mit Plastifizierzylinder und Plastifizier- und Einspritzschnecke und einem den Plastifizierzylinder verschließenden Bereich mit einem Kanal für den plastifizierten Werkstoff, wobei dieser Bereich einen sich vom Plastifizierzylinderinnendurchmesser auf den Kanaldurchmesser verjüngenden kegeligen Übergang aufweist **dadurch gekennzeichnet, dass** in den kegelförmigen Übergang (13) ein kegeliger Schmelzeverdrängungskörper (16) unverdrehbar eingesetzt ist, der eine sich zur Plastifizier-und Einspritzschnecke hin kegelförmig erweiternde mittige Bohrung (17) und auf dem Kegelmantel verteilte, radial nach außen offene Längsnuten (18) aufweist, die sich an der Plastifizier- und Einspritzseite zugewandten Seite trichterförmig (19) erweitern.

6. Vorrichtung nach Anspruch 5, **dadurch gekennzeichnet, dass** Ränder der in Umfangsrichtung benachbarten trichterförmigen Ausnehmungen (19) ineinander übergehen.

7. Vorrichtung nach Anspruch 5 oder 6, **dadurch gekennzeichnet, dass** die Ränder der um die mittige trichterförmige Ausnehmung (29) verteilt angeordneten weiteren trichterförmigen Ausnehmungen (19)in den Rand der mittigen Ausnehmung (29) übergehen.

8. Vorrichtung nach einem der Ansprüche 5 bis 7, **dadurch gekennzeichnet, dass** der Schmelzeverdrängungskörper (16) an seinem der Spitze abgewandten Ende einen ringförmigen Stützkragen (21) aufweist, dessen der Spitze zugewandte Ringfläche (22) an einer ringförmigen Anschlagfläche (23) der Düse (12) anliegt.

9. Vorrichtung nach einem der Ansprüche 5 bis 8, **dadurch gekennzeichnet, dass** das dem Schmelzeverdrängungskörper (16) zugewandte Ende der Plastifiziereinheit, insbesondere der Schneckenspitze (11), im wesentlichen als plane Fläche (25) ausgebildet ist, die sich quer zur Förderrichtung der Plastifiziereinheit erstreckt und an die Unterseite des Schmelzeverdrängungskörpers (16) anlegbar ist.

10. Vorrichtung nach Anspruch 9, **dadurch gekennzeichnet, dass** das Ende der Plastifiziereinheit als zweiflügeliges Förderelement mit mittigem Materialabgabekanal, der eine kreisabschnittförmige Ausfräsung (26) aufweist, ausgebildet ist.

11. Vorrichtung nach Anspruch 9 oder 10, **dadurch gekennzeichnet, dass** das Ende der Plastifiziereinheit im Durchmesser der Ausnehmung (28) am Ende des Verdrängungskörpers (16) eng angepasst ist, vorzugsweise nur Bruchteile eines Millimeters kleiner ist.

12. Vorrichtung nach einem der Ansprüche 9 bis 11, **dadurch gekennzeichnet, dass** die plane Endfläche (25) der Plastifiziereinheit in eine gegen die Förderrichtung leicht ansteigende, wendelartige Fläche (27) übergeht.

## Claims

1. Apparatus for injection moulding of mouldings composed of plasticisable material, in particular plastic, primarily PVC, comprising a plasticising unit with a plasticising cylinder and a plasticising and injection screw and a region which closes the plasticising cylinder and has a duct for the plasticised material, this region having a transition which tapers conically from the inside diameter of the plasticising cylinder to the diameter of the duct, and a melt displacement body (1) being inserted into the conical transition, an annular gap being formed between the displacement body (1) and the conical transition of the region which closes the plasticising cylinder, a radially projecting annular supporting collar (2) being provided at the foot of the displacement body (1), the supporting collar (2) being penetrated by holes (3) which open into the annular gap and the spacing between which is less than their diameter, and a second conical body (5) projecting from the side of the supporting collar (2) facing away from the displacement body (1) and towards the plasticising and injection screw, the said conical body projecting centrally between the circle generated by the holes (3), **characterised in that** the holes (3) widen in a funnel shape towards the plasticising and injection screw, the displacement body (1) is of conical design and **in that** the diameter of each hole (3) corresponds to the thickness of the annular gap.

2. Apparatus according to Claim 1, **characterised in that** the holes (3) extend parallel to one another and parallel to the centre line of the conical bodies (1, 5).

3. Apparatus according to either of Claims 1 and 2, **characterised in that** the funnel-shaped inlet openings of the holes (3) merge into one another.

4. Apparatus according to one of Claims 1 to 3, **characterised in that** the displacement body (1) rests in a leaktight manner by means of its supporting collar (2) against an annular stop surface of the region closing the plasticising cylinder.

5. Apparatus for injection moulding of mouldings composed of plasticisable material, in particular plastic, primarily PVC, comprising a plasticising unit with a plasticising cylinder and a plasticising and injection screw and a region which closes the plasticising cylinder and has a duct for the plasticised material, this region having a transition which tapers conically from the inside diameter of the plasticising cylinder to the diameter of the duct, **characterised in that** a conical melt displacement body (16), which has a central hole (17) widening conically towards the plasticising and injection screw and longitudinal grooves (18), which are distributed over the lateral surface of the cone and which are open radially outwards and widen in a funnel shape (19) on the side facing the plasticising and injection side, is inserted nonrotatably into the conical transition (13).

6. Apparatus according to Claim 5, **characterised in that** edges of the circumferentially adjacent funnel-shaped recesses (19) merge into one another.

7. Apparatus according to Claim 5 or 6, **characterised in that** the edges of the further funnel-shaped recesses (19) arranged in a manner distributed around the central funnel-shaped recess (29) merge into the edge of the central recess (29).

8. Apparatus according to one of Claims 5 to 7, **characterised in that** the melt displacement body (16) has, at its end remote from the tip, an annular supporting collar (21), whose annular surface (22) facing the tip rests against an annular stop surface (23) of the nozzle (12).

9. Apparatus according to one of Claims 5 to 8, **characterised in that** the end of the plasticising unit facing the melt displacement body (16), in particular the screw tip (11), is designed essentially as a flat surface (25) which extends transversely to the delivery direction of the plasticising unit and can be laid against the underside of the melt displacement body (16).

10. Apparatus according to Claim 9, **characterised in that** the end of the plasticising unit is designed as a twin-blade delivery element with a central material discharge duct, which has a milled recess (26) in the form of a circular segment.

11. Apparatus according to Claim 9 or 10, **characterised in that** the diameter of the end of the plasticising unit is closely matched to the recess (28) at the end of the displacement body (16), preferably being only fractions of a millimetre smaller.

12. Apparatus according to one of Claims 9 to 11, **characterised in that** the flat end surface (25) of the plasticising unit merges into a spiral surface (27) which rises slightly counter to the delivery direction.

## Revendications

1. Dispositif pour mouler par injection des objets en une matière plastifiable, notamment en matière plastique, de préférence en PVC, composé d'une unité plastifiante comportant des cylindres plastifiants et une vis plastifiante et d'injection, et d'une partie fermant le cylindre plastifiant munie d'un canal pour la matière plastifiée, cette partie présentant une transition conique se rétrécissant depuis le diamètre intérieur du cylindre plastifiant jusqu'au diamètre du canal, et un corps (1) déplaçant la masse fondue étant inséré dans la transition conique, une fente annulaire étant formée entre le corps déplaceur (1) et la transition conique de la partie fermant le cylindre plastifiant, un collet d'appui annulaire faisant saillie radialement (2) étant prévu à la base du corps déplaceur (1), le collet d'appui (2) étant traversé par des perçages (3) qui débouchent dans la fente annulaire et dont l'écart réciproque est inférieur à leur diamètre, et un second corps conique (5) faisant saillie de la face du collet d'appui (2) qui est opposée au corps déplaceur et tournée vers la vis plastifiante et d'injection, au centre du cercle formé par les perçages (3), **caractérisé en ce que** les perçages (3) s'élargissent en entonnoir vers la vis plastifiante et d'injection, **en ce que** le corps déplaceur (1) est réalisé en forme de cône, et **en ce que** le diamètre de chaque perçage (3) correspond à l'épaisseur de la fente annulaire.

2. Dispositif selon la revendication 1, **caractérisé en ce que** les perçages (3) s'étendent parallèlement entre eux et parallèlement à l'axe médian des corps coniques (1, 5).

3. Dispositif selon la revendication 1 ou 2, **caractérisé en ce que** les orifices d'entrée en forme d'entonnoir des perçages (3) se confondent.

4. Dispositif selon l'une des revendications 1 à 3, **caractérisé en ce que** le corps déplaceur (1) est étroitement appliqué avec son collet d'appui (2) contre une surface de butée annulaire de la partie fermant le cylindre plastifiant.

5. Dispositif pour mouler par injection des objets en une matière plastifiable, notamment en matière plastique, de préférence en PVC, composé d'une unité plastifiante comportant des cylindres plastifiants et une vis plastifiante et d'injection, et d'une partie fermant le cylindre plastifiant munie d'un canal pour la matière plastifiée, cette partie présentant une transition conique se rétrécissant depuis le diamètre intérieur du cylindre plastifiant jusqu'au diamètre du canal, **caractérisé en ce qu'**un corps conique déplaçant la masse fondue (16) est logé de manière fixe en rotation dans la transition conique (13), lequel présente un perçage central (17) s'élargissant de façon conique vers la vis plastifiante et d'injection et des rainures longitudinales (18) ouvertes radialement vers l'extérieur et réparties sur l'aire latérale du cône, qui s'élargissent en forme d'entonnoir (19) du côté tourné vers le côté plastifiant et d'injection.

6. Dispositif selon la revendication 5, **caractérisé en ce que** les bords des évidements (19) en entonnoir adjacents dans la direction du pourtour se confondent.

7. Dispositif selon la revendication 5 ou 6, **caractérisé en ce que** les bords des évidements en entonnoir (19) qui sont répartis autour de l'autre évidement central en entonnoir (29) se confondent avec le bord de l'évidement central (29).

8. Dispositif selon l'une des revendications 5 à 7, **caractérisé en ce que** le corps déplaçant la masse fondue (16) présente à son extrémité opposée à la pointe un collet d'appui annulaire (21) dont la surface annulaire (22) qui est tournée vers la pointe est appliquée contre une surface de butée annulaire (23) de la filière d'extrusion (12).

9. Dispositif selon l'une des revendications 5 à 8, **caractérisé en ce que** l'extrémité de l'unité plastifiante qui est tournée vers le corps déplaçant la masse fondue (16), notamment la pointe de la vis (11), est essentiellement réalisée en tant que surface plane (25) qui s'étend transversalement à la direction de déplacement de l'unité plastifiante et peut être appliquée contre le dessous du corps déplaçant la masse fondue (16).

10. Dispositif selon la revendication 9, **caractérisé en ce que** l'extrémité de l'unité plastifiante est réalisée sous la forme d'un élément de transport à deux ailettes qui est muni d'un canal central par où sort la matière et présentant une fraisure (26) en forme de segment de cercle (26).

11. Dispositif selon la revendication 9 ou 10, **caractérisé en ce que** l'extrémité de l'unité plastifiante possède un diamètre parfaitement ajusté à l'évidement (28) situé à l'extrémité du corps déplaceur (16), de préférence inférieur de quelques fractions de millimètre seulement

12. Dispositif selon l'une des revendications 9 à 11, **caractérisé en ce que** la surface d'extrémité plane (25) de l'unité plastifiante devient une surface hélicoïdale remontant légèrement dans le sens contraire au sens d'avancement.
